# EUROPEAN PATENT SPECIFICATION

(11) **EP 2 676 108 B1**
(45) Date of publication and mention of the grant of the patent: **20.04.2016**
(21) Application number: 12710387.7
(22) Date of filing: 21.02.2012
(51) Int. Cl.: G01J 3/02, G01D 11/24, G01B 11/14

(54) **OPTICAL SENSOR ENCLOSURE WITH INTEGRAL WINDOW AND OPTICAL ALIGNMENT FEATURES**
GEHÄUSE EINES OPTISCHEN SENSORS MIT INTEGRIERTEN FENSTER UND MIT MERKMALEN ZUR OPTISCHEN AUSRICHTUNG
BOÎTIER DE CAPTEUR OPTIQUE DOTÉ D'UNE FENÊTRE INTÉGRÉE ET DE FONCTIONS D'ALIGNEMENT OPTIQUE

(30) Priority: 18.02.2011 US 201161444443 P
(43) Date of publication of application: 25.12.2013
(73) Proprietor: Parker-Hannifin Corporation, Cleveland, OH 44124 (US)
(72) Inventor: BINA, David, Northfield Center, Ohio 44067 (US); CIRILLO, James, Cleveland Heights, Ohio 44118 (US)
(74) Representative: Belcher, Simon James
(86) International application number: PCT/US2012/025876
(87) International publication number: WO 2012/112988

(56) References cited:
- WO-A1-2009/140503
- US-A- 5 149 963

## Description

### Field of the Invention

The present invention relates to a piston-cylinder assembly having a sensor for detecting the position of a piston rod relative to a cylinder housing, and more particularly to an enclosure for sensor components that maintains proper location and alignment of an optical train for application in absolute position sensing.

### Background to the invention

Piston-cylinder assemblies are used in various actuator applications throughout industry, such as in construction equipment. Often it is advantageous for an operator to be aware of the specific position of a piston rod in a fluid pressure-operated cylinder since the working member being actuated is generally physically connected to the end of the piston rod.

US-7047865, for example, discloses a known actuator with a cylinder housing and a rod that is axially movable relative to the cylinder housing. The actuator also has sensor for absolute position sensing in which light from a light source illuminates a pattern on the rod. The sensor is attached to the cylinder housing and detects light reflected from an adjacent portion of the pattern. The position of the rod relative to the housing is determined from the known position of the sensor relative to the housing and the portion of the pattern detected by the sensor.

In contrast to absolute-position sensors, relative-position sensor systems also are known, but they require periodic "zeroing" to maintain accurate position information. In the event of a power failure, for example, the rod generally must be retracted to a "home" position before being extended again. Depending on the circumstances when the hydraulic cylinder lost power, this might not be practical or even possible. An absolute position sensor always knows the position of the rod, even after a power failure. Knowing absolute position also can be used to more accurately control the actuator extension/retraction.

WO-A-2009/140503 discloses a probe adapted to detect a portion of a pattern, for determining a location or an absolute position of a rod relative to a housing of a cylinder. The probe includes a light source for emitting light, and a light pipe that directs light emitted by the light source onto the pattern of the rod. The probe also includes a detector that detects light and provides a signal indicative of the detected light. A lens produces an image of a portion of the pattern illuminated by the light on the detector. A controller is responsive to the signal from the detector for determining an absolute position of the rod relative to the cylinder.

US-5149963 discloses a fiber-optic position sensor that includes a light source, a light detector that produces analog electrical signals proportional to the intensity of the incident light on the detector, and fiber-optic bundles for transmitting illumination light to an object, transmitting reflected light from the object to the detector, and reference light from a light source directly to the detector. Electronic circuits also are provided for the use with the optical position sensor for processing the signals from the detector to determine the position of the object.

### Summary of the Invention

The present invention provides an optical sensor as defined in claim 1.

The enclosure includes a housing and a lower cassette that cooperate to provide a sealed volume in which an optical sensor assembly is enclosed and protected. The optical sensor assembly includes a circuit board mounted in the housing. The circuit board includes a light source and a light detector. The sensor assembly further includes optical elements that guide light from the light source onto a target and reflected light from the target onto the light detector. The lower cassette is transparent to the light produced by the light source and forms a window through which the light enters and exits the lower cassette. The window is thus an integral part of the structural enclosure, specifically the lower cassette, and is not a separate element. The lower cassette is a single piece, and preferably is molded of a transparent material, such as plastic. Care must be taken when molding the lower cassette that the liquid material injected into the mold does not form a front that stops where it would extend across the window, or other distortion-creating artifacts of the molding process.

The present invention thus provides an optical sensor in which an optical window is integrated with a structural lower cassette portion of an enclosure that protects a sensor assembly while allowing light to pass through, facilitating the provision of uniform illumination on a target and the reception of reflected light from the target.

Further features of the invention will become apparent from the following detailed description when considered in conjunction with the drawings.

### Brief Description of the Drawings

FIG. 1 is perspective view of an exemplary actuator with a sensor.
FIG. 2 is a cross-sectional view of the actuator shown in FIG. 1 as seen along lines 2-2.
FIG. 3 is a perspective view of a window side of the sensor provided by the present invention.
FIG. 4 is a plan view of a housing side of the sensor shown in FIG. 3.
FIG. 5 is a cross-sectional view of the sensor of FIG. 4 as seen along lines 5-5.
FIGS. 6 and 7 are perspective exploded views of the sensor of FIG. 4.

### Detailed Description

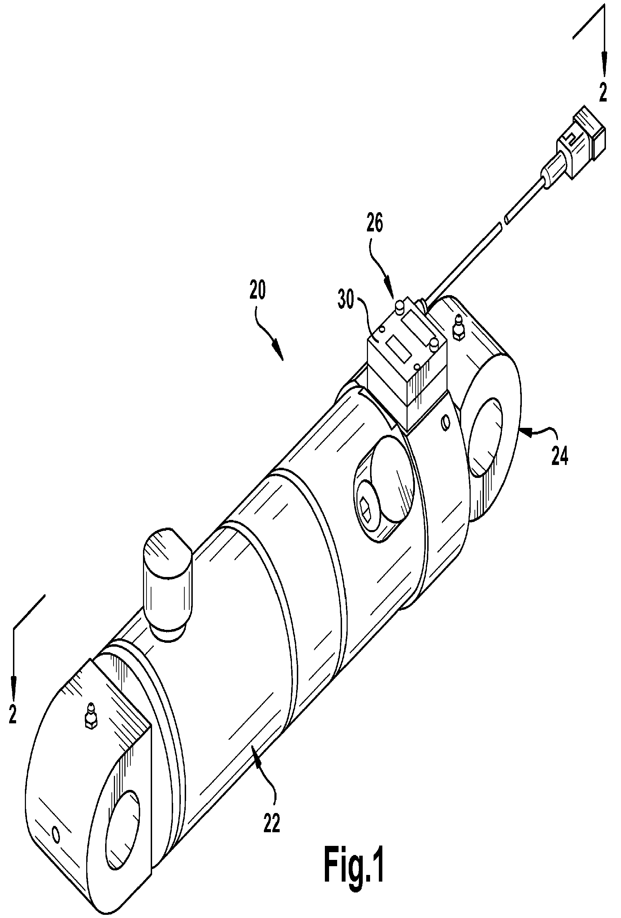

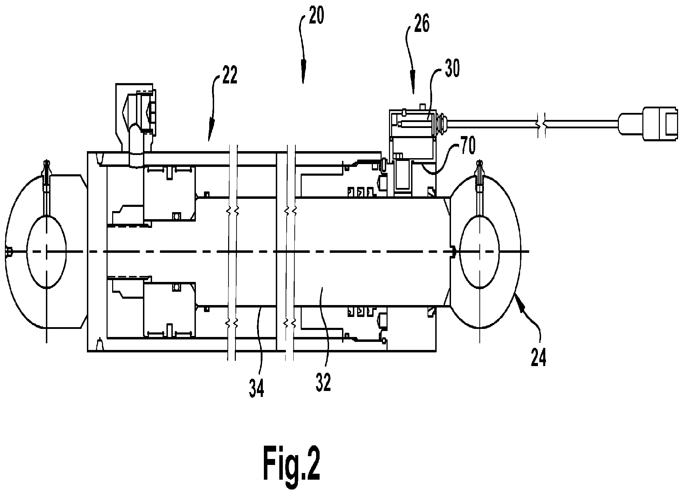

Referring now to the drawings and initially to FIGS. 1 and 2, an exemplary embodiment of an actuator provided by the invention is shown generally at 20. The actuator 20 includes a cylinder assembly 22, a piston assembly 24 that is movable relative to the cylinder assembly 22, and a sensor assembly 26 with a sensor 30 for detecting the position of the piston assembly 24 relative to the cylinder assembly 22. The piston assembly 24 includes an elongated piston rod 32 that has indicia markings (not shown) provided on at least a longitudinal portion of its peripheral surface 34. These markings include patterns that vary along the length of the rod 32, enabling the sensor 30 to identify the position of the rod 32 from a portion of the pattern adjacent the sensor 30.

Although the invention is described with reference to a piston-cylinder actuator 20, the sensor 30 can be used with hydraulic actuators, pneumatic actuators, rotary actuators, or any other device that requires position sensing, either relative or absolute. Additionally, although the indicia were described as markings on the surface of the rod, the markings can be provided below the surface of the rod, and can be printed, etched, cut, embedded, or otherwise formed in or on the rod, so long as the indicia function to identify a position on the rod.

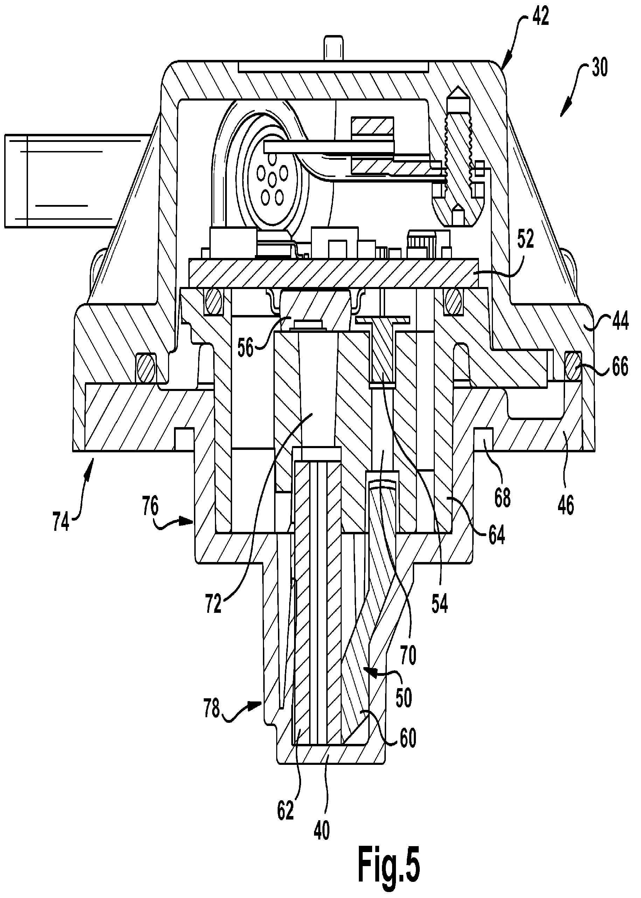

WO-A-2009/140503 (referred to above) discloses an absolute position sensor, referred to as a probe. The probe has a housing with a lower casing and an upper casing. A cassette supports an optical assembly. A window is integrally formed in or is separate from but supported by the cassette. See FIGS. 5 and 8, for example. In both embodiments the window is recessed and separate from the surface of the housing. The lower casing of the housing thus reduces the field of view through the window and the amount of light that can be received and analyzed by the light detector.

This construction also adds additional components and manufacturing steps. For example, to maintain a proper alignment of the all the optical components, the internal dimensions of the lower casing and external dimensions of the cassette must be controlled to maintain alignment of the optical pathways. If the dimensions are not properly maintained, the optical paths can be compromised and there is a potential to impart stress on the cassette and thereby in the window. Stress on the window would be likely to induce optical distortion in the window.

Unlike such prior art sensors, the present invention provides a sensor 30 with an integral window 40 in the structure of an enclosure 42, rather than recessed within the enclosure 42 or provided separately from the enclosure 42. This simplifies assembly and reduces the number of parts, while also expanding the field of view for the light exiting and entering the sensor 30. The illustrated window 40 is planar, or flat, with a large surface for the transmission of light with minimal and uniform distortion. Alternatively, the window 40 can act as a lens, in which case the window can be curved or have varying thickness or a combination thereof.

Integrating the window 40 into a structural portion of the enclosure 42 is complicated by the need to maintain optical clarity in the window 40. The enclosure 42 includes a housing 44 and a lower cassette 46 that cooperate to enclose the sensor assembly 26. The lower cassette 46 typically is made of a plastic or similar moldable material. The lower cassette 46 can be formed in an injection molding process, for example, but the window 40 must be formed without any optical distortion-creating artifacts of the molding process, such as weld lines, gate marks, or other defects that cause optical distortion, particularly non-uniform distortion while still maintaining structural integrity. For these and other reasons, in prior optical sensors, such as those disclosed in WO-A-2009/140503, the window is a separate component or is provided as a separate component from structural portions of the enclosure.
This construction also reduces the tolerances required to align the optical components, as the outside dimensions of the lower cassette 46 are no longer relevant to maintain optical paths.

The present invention thus provides an optical sensor 30 with a novel integration of an optical window 40 with a structural lower cassette 46 portion of an enclosure 42 that protects the sensor assembly 26 while allowing light to pass through, facilitating the provision of uniform illumination on a target and the reception of reflected light from the target.

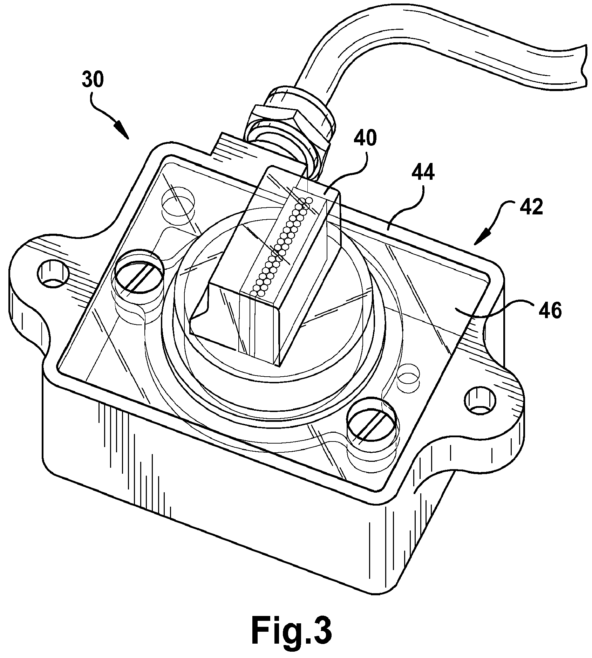

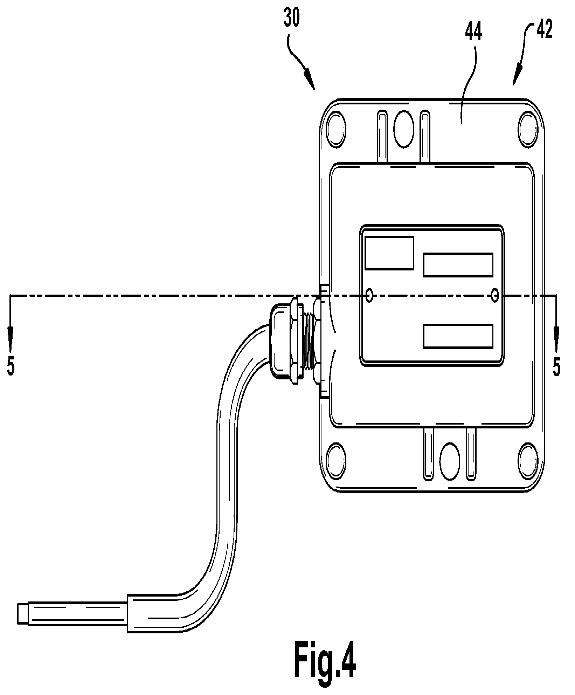

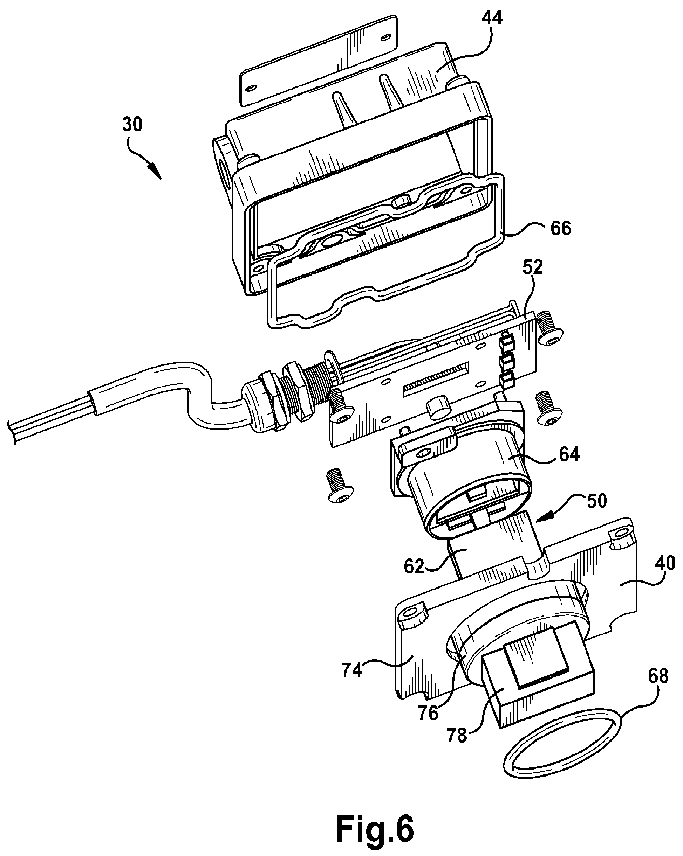

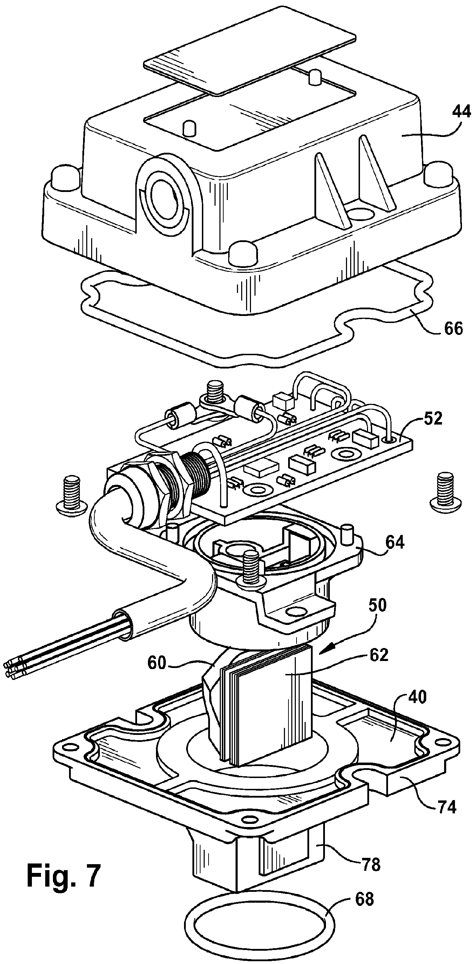

An exemplary sensor 30 provided by the invention is shown in further detail in FIGS. 3-7. The sensor 30 includes the enclosure 42, composed of the housing 44 and the lower cassette 46, and the sensor assembly 26. The sensor assembly 26 includes a light guidance assembly 50, a circuit board 52 with a light source 54, such as a light-emitting diode (LED), and a light detector 56, such as a charge-coupled device (CCD). The light guidance assembly 50 provides means for guiding light from the light source 54 to a target, such as the marked surface 34 of a piston rod 32 (FIG. 2), and for guiding light reflected from the target to the light detector 56. An exemplary light guidance assembly 50 includes a light pipe 60 that guides light from the light source 54, typically infrared (IR) or visible wavelengths, to illuminate the target. An exemplary light guidance assembly 50 also can include a lens, such as a GRIN lens 62, which is formed by an array of glass rods that have a graded index of refraction profile across each individual rod diameter so that the complete array acts like a single lens. The lens 62 is mounted such that it engages the window 40 in the lower cassette 46. When the lens 62 is placed at a proper focal distance from the target and the light detector 56, the lens 62 forms a one-to-one image of an adjacent portion of the target on the light detector 56.

The illustrated sensor 30 also includes an upper cassette 64 interposed between the lower cassette 46 and the circuit board 52 to help to ensure the proper alignment of the optical elements of the guidance assembly 50 relative to the light source 54 and the light detector 56 on the circuit board 52. The sensor 30 also includes a seal 66 between the housing 44 and the lower cassette 46, and a seal 66 between the lower cassette 46 and a mounting surface, such as 70 (FIG. 2), typically coupled to the cylinder assembly 22 in a piston-cylinder actuator 20 (FIG. 2).

The guidance assembly's 50 optical components, in this case the GRIN lens 62 and the light pipe 60 are placed in the lower cassette 46 in optical contact with the window 40. The assembled lower cassette 46 and optical components 60 and 62 are mated with the upper cassette 64, the circuit board 52, and the housing 44 to complete the enclosure of the sensor assembly 26. In the process, the lens 62 and the light pipe 60 are received in cavities in the upper cassette 64. The upper cassette 64 includes a pair of through-holes 70 and 72 that provide optical pathways through the upper cassette 64. When the upper cassette 64 is aligned with the circuit board 52, these through-holes 70 and 72 are aligned with the light source 54 and the light detector 56, respectively.

The illustrated lower cassette 46 includes a peripheral mounting portion 74 that provides a surface for mounting the lower cassette to the housing 44. Protruding from the mounting portion 74 is a cylindrical section 76 that forms an interior receptacle that is dimensioned to receive the upper cassette 64. Thus the inside dimension of the cylindrical section 76 of the lower cassette 46 and the outside dimension of the upper cassette 64 are important for ensuring proper alignment of the optical pathways from the light source 54 to the window 40 and through the window 40 to the light detector 56. The upper cassette 64 is thus located in the enclosure 42 by the lower cassette 46. The recess formed by the extension 78 supports a lower portion of the light pipe 60 and the lens 62 adjacent the window 40, and the upper cassette 64 includes locating features that define through-holes 70 and 72 that support upper portions of the light pipe 60 and the lens 62 relative to the light source 54 and the light detector 56. The light pipe 60 and the GRIN lens 62 are received in an interior recess formed by a further extension 78 protruding from the cylindrical section 76. The distal end of this extension 78 is provided by the window 40. Thus the lower cassette 46 extends away from the housing 44, and the window 40 forms the distal portion of the lower cassette 46 to provide an unobstructed view to the target.

The present invention also provides a method of making an enclosure 42 for an optical sensor 30, includes the steps of molding a lower cassette 46 from a transparent material, the lower cassette 46 having an integral window 40; and connecting the lower cassette 46 to a housing 44 to define the enclosure 42 to enclose a sensor assembly 26 therein, where the window 40 is free of any optical distortion from the molding step.

During assembly, the light pipe 60 and the GRIN lens 62 are placed in the lower cassette 46, the circuit board 52 is mounted to the housing 44, and the upper cassette 64 is mounted to the circuit board 52. Then the lower cassette 46 is mounted to the housing 44, enclosing the upper cassette 64 and the circuit board 52 between the housing 44 and the lower cassette 46 and inserting the light pipe 60 and the lens 62 into the through-holes 70 and 72 in the upper cassette 64, which is received in the cylindrical section 76 of the lower cassette 46.

In summary, the present invention provides an improved enclosure for a position sensor 30 includes a housing 44 and a lower cassette 46 that cooperate to provide a sealed volume in which a sensor assembly 26 is enclosed and protected. The sensor assembly 26 includes a light source 54 and a light detector 56. The sensor assembly 26 further includes a light pipe 60 that guides light from the light source 54 onto a target and a lens 62 that guides reflected light from the target onto the light detector 56. The lower cassette 46 is transparent to the light produced by the light source 54 and includes an integral window 40 through which the light enters and exits the lower cassette 46. An upper cassette 64 supports an upper portion of the light pipe 60 and the lens 62. A recess adjacent the window 40 supports a lower portion of the light pipe 60 and the lens 62 in the lower cassette 46, and the upper cassette 64 is received in a receptacle formed inside the lower cassette 46.

## Claims

1. An optical sensor (30), comprising:
a sensor assembly (26) that includes a light source (54), a light detector (56), and a light guidance assembly (50) that includes a light pipe (60) for guiding light from the light source (54) and a lens (62) for guiding light to the light detector (56),
an upper cassette with locating features for supporting upper portions of the light pipe (60) and the lens (62) relative to the light source (54) and the light detector (56), respectively, and
an enclosure (42) having a housing (44) and a lower cassette (46) that cooperate to enclose the sensor assembly (26) and the upper cassette (64),
where the lower cassette (46) includes an interior receptacle for receiving the upper cassette (64), an extension (78) that extends away from the housing (44), an integral window (40) that is transparent to light from the light source (54), and an interior recess formed by the extension (78) adjacent the window (40) for supporting lower portions of the light pipe (60) and the lens (62) adjacent the window (40),
**characterized in that**
the window (40) forms the distal end of the extension (78) of the lower cassette (46) .

2. A sensor (30) as set forth in claim 1, where the lower cassette (46) is molded of a material that is transparent to the wavelength of light produced by the light source (54).

3. A sensor (30) as set forth in claim 2, where the lower cassette (46) is molded of plastic and the window (40) is free of any molding features that would create optical distortion.

4. A sensor (30) as set forth in any of claims 1 to 3, where the light source (54) includes a light emitting diode (LED).

5. A sensor (30) as set forth in any of claims 1 to 4, where the light detector (56) includes a charge coupled device (CCD).

6. A sensor (30) as set forth in any of claims 1 to 5, where the lens includes a gradient-index (GRIN) lens (62).

7. A sensor (30) as set forth in any of claims 1 to 6, where the sensor assembly (26) includes a circuit board (52), the light source (54) and the light detector (56) are mounted on the circuit board (52), and the circuit board (52) is mounted in the housing (44).

8. A sensor (30) as set forth in any of claims 1 to 7, where the window (40) is flat.

9. A sensor (30) as set forth in any of claims 1 to 8, where the lower cassette (42) is mounted directly to the housing (44).

10. A piston-cylinder actuator (20), comprising a piston rod (32) in a piston assembly (24) and a cylinder assembly (22), the piston rod (32) being movable relative to the cylinder assembly (22), the piston rod (32) having a pattern extending along a length of the rod (32) to identify a position along the rod (32), and an optical sensor (30) as set forth in any of claims 1 to 9 mounted relative to the cylinder assembly (22) to determine the position of the rod (32) relative to the cylinder assembly (22) from a portion of the pattern detected adjacent the sensor (30).

11. An actuator (20) as set forth in claim 10, where the lens (62) is mounted adjacent the window (40) at a distance from the surface of the piston rod (32) so as to provide a one-to-one image of an adjacent portion of the rod (32) to the light detector (56).

12. A method of making an enclosure for an optical sensor, includes the steps of molding a lower cassette from a transparent material, and connecting the lower cassette to a housing to define an enclosure for enclosing a sensor assembly therein, where the lower cassette has an extension that extends away from the housing, **characterized by**
an integral window that forms a distal end of the extension of the lower cassette, and the window is free of any optical distortion from the molding step.

## Patentansprüche

1. Optischer Sensor (30), umfassend:
eine Sensoranordnung (26), die eine Lichtquelle (54), einen Lichtdetektor (56) und eine Lichtleiteranordnung (50) aufweist, die einen Lichtleiter (60) zum Leiten von Licht von der Lichtquelle (54) und eine Linse (62) zum Leiten von Licht zum Lichtdetektor (56) aufweist,
eine obere Kassette mit Positionierungsmerkmalen zum Abstützen oberer Teile des Lichtleiters (60) und der Linse (62) relativ zur Lichtquelle (54) bzw. zum Detektor (56), und
eine Einhausung (42), die ein Gehäuse (44) und eine untere Kassette (46) aufweist, die zusammenwirken, um die Sensoranordnung (26) und die obere Kassette (64) einzuschließen,
wobei die untere Kassette (46) eine innere Aufnahme zum Aufnehmen der oberen Kassette (64), eine Erweiterung (78), die sich von dem Gehäuse (44) weg erstreckt, ein integrales Fenster (40), das für Licht von der Lichtquelle (54) durchlässig ist, und eine innere Vertiefung aufweist, die von der Erweiterung (78) dem Fenster (40) benachbart gebildet wird, um untere Teile des Lichtleiters (60) und der Linse (62) dem Fenster (40) benachbart abzustützen,
**dadurch gekennzeichnet, dass**
das Fenster (40) das distale Ende der Erweiterung (78) der unteren Kassette (46) bildet.

2. Sensor (30) gemäß Anspruch 1, wobei die untere Kassette (46) aus einem Material geformt ist, das für die Wellenlänge des von der Lichtquelle (54) erzeugten Lichts durchlässig ist.

3. Sensor (30) gemäß Anspruch 2, wobei die untere Kassette (46) aus Kunststoff geformt ist und das Fenster (40) frei von jeglichen Formmerkmalen ist, die eine optische Verzerrung verursachen würden.

4. Sensor (30) gemäß einem der Ansprüche 1 bis 3, wobei die Lichtquelle (54) eine Leuchtdiode (LED) aufweist.

5. Sensor (30) gemäß einem der Ansprüche 1 bis 4, wobei der Lichtdetektor (56) ein CCD-Element aufweist.

6. Sensor (30) gemäß einem der Ansprüche 1 bis 5, wobei die Linse eine Gradienten-Index-Linse (GRIN) (62) aufweist.

7. Sensor (30) gemäß einem der Ansprüche 1 bis 6, wobei die Sensoranordnung (26) eine Leiterplatte (52) aufweist, die Lichtquelle (54) und der Lichtdetektor (56) auf der Leiterplatte (52) angebracht sind und die Leiterplatte (52) in dem Gehäuse (44) angebracht ist.

8. Sensor (30) gemäß einem der Ansprüche 1 bis 7, wobei das Fenster (40) flach ist.

9. Sensor (30) gemäß einem der Ansprüche 1 bis 8, wobei die untere Kassette (42) direkt in dem Gehäuse (44) angebracht ist.

10. Kolben-Zylinder-Aktor (20), umfassend eine Kolbenstange (32) in einer Kolbenanordnung (24) und einer Zylinderanordnung (22), wobei die Kolbenstange (32) relativ zur Zylinderanordnung (22) beweglich ist, wobei die Kolbenstange (32) ein Muster aufweist, das sich entlang einer Länge der Stange (32) erstreckt, um eine Position entlang der Stange (32) zu identifizieren, und einen optischen Sensor (30) gemäß einem der Ansprüche 1 bis 9, der relativ zur Zylinderanordnung (22) angebracht ist, um die Position der Stange (32) relativ zur Zylinderanordnung (22) aus einem Teil des Musters zu bestimmen, das dem Sensor (30) benachbart erfasst wird.

11. Aktor (20) gemäß Anspruch 10, wobei die Linse (62) dem Fenster (40) benachbart in einem Abstand von der Oberfläche der Kolbenstange (32) angebracht ist, um so ein Eins-zu-eins-Bild eines benachbarten Teils der Stange (32) an den Lichtdetektor (56) zu liefern.

12. Verfahren zum Herstellen einer Einhausung für einen optischen Sensor, das die Schritte des Formens einer unteren Kassette aus einem transparenten Material und des Verbindens der unteren Kassette mit einem Gehäuse beinhaltet, um eine Einhausung zum Einschließen einer Sensoranordnung in dieser zu definieren, wobei die untere Kassette eine Erweiterung hat, die sich von dem Gehäuse weg erstreckt,
**gekennzeichnet durch**
ein integrales Fenster, das ein distales Ende der Erweiterung der unteren Kassette bildet, und wobei das Fenster frei von jeglicher optischer Verzerrung aus dem Schritt des Formens ist.

## Revendications

1. Capteur optique (30), comprenant :
un ensemble capteur (26) qui comporte une source de lumière (54), un détecteur de lumière (56), et un ensemble de guidage de lumière (50) qui comporte un conduit de lumière (60) pour guider la lumière provenant de la source de lumière (54) et une lentille (62) pour guider la lumière vers le détecteur de lumière (56),
une cassette supérieure avec des éléments de localisation pour supporter des parties supérieures du conduit de lumière (60) et la lentille (62) par rapport à la source de lumière (54) et au détecteur de lumière (56), respectivement, et
une enceinte (42) ayant un boîtier (44) et une cassette inférieure (46) qui coopèrent pour enfermer l'ensemble capteur (26) et la cassette supérieure (64),
où la cassette inférieure (46) comporte un réceptacle intérieur pour recevoir la cassette supérieure (64), une extension (78) qui s'étend loin du boîtier (44), une fenêtre intégrée (40) qui est transparente à la lumière provenant de la source de lumière (54), et un évidement intérieur formé par l'extension (78) adjacente à la fenêtre (40) pour supporter des parties inférieures du conduit de lumière (60) et la lentille (62) adjacente à la fenêtre (40),
**caractérisé en ce que**
la fenêtre (40) forme l'extrémité distale de l'extension (78) de la cassette inférieure (46).

2. Capteur (30) selon la revendication 1, dans lequel la cassette inférieure (46) est moulée à partir d'un matériau qui est transparent à la longueur d'onde de la lumière produite par la source de lumière (54).

3. Capteur (30) selon la revendication 2, où la cassette inférieure (46) est moulée en matière plastique et la fenêtre (40) est exempte de tout élément de moulage qui pourrait créer une distorsion optique.

4. Capteur (30) selon l'une des revendications 1 à 3, où la source de lumière (54) comporte une diode électroluminescente (LED).

5. Capteur (30) selon l'une des revendications 1 à 4, où le détecteur de lumière (56) comporte un dispositif à couplage de charge (CCD).

6. Capteur (30) selon l'une des revendications 1 à 5, où la lentille comporte une lentille à gradient d'indice (GRIN) (62).

7. Capteur (30) selon l'une des revendications 1 à 6, où l'ensemble capteur (26) comporte une carte de circuit imprimé (52), la source de lumière (54) et le détecteur de lumière (56) sont montés sur la carte de circuit imprimé (52), et la carte de circuit imprimé (52) est montée dans le boîtier (44).

8. Capteur (30) selon l'une des revendications 1 à 7, où la fenêtre (40) est plate.

9. Capteur (30) selon l'une des revendications 1 à 8, où la cassette inférieure (42) est montée directement sur le boîtier (44).

10. Actionneur à piston-cylindre (20), comprenant une tige de piston (32) dans un ensemble piston (24) et un ensemble cylindre (22), la tige de piston (32) étant mobile par rapport à l'ensemble cylindre (22), la tige de piston (32) ayant un motif s'étendant le long d'une longueur de la tige (32) pour identifier une position le long de la tige (32), et un capteur optique (30) selon l'une des revendications 1 à 9, monté par rapport à l'ensemble cylindre (22) pour déterminer la position de la tige (32) par rapport à l'ensemble cylindre (22) à partir d'une partie du motif détecté adjacent au capteur (30).

11. Actionneur (20) selon la revendication 10, où la lentille (62) est montée adjacente à la fenêtre (40) à une distance de la surface de la tige de piston (32) de manière à fournir une image biunivoque d'une partie adjacente de la tige (32) au détecteur de lumière (56).

12. Procédé de fabrication d'une enceinte pour un capteur optique, comporte les étapes qui consistent à mouler une cassette inférieure à partir d'un matériau transparent, et
à relier la cassette inférieure à un boîtier pour définir une enceinte afin d'enfermer un ensemble capteur dans celle-ci, où la cassette inférieure a une extension qui s'étend loin du boîtier, **caractérisé par**
une fenêtre intégrée qui forme une extrémité distale de l'extension de la cassette inférieure, et la fenêtre est exempte de toute distorsion optique de l'étape de moulage.
